(19) Europäisches Patentamt
European Patent Office
Office européen des brevets

(11) Publication number: **0 062 861**
**A1**

(12) # EUROPEAN PATENT APPLICATION

(21) Application number: 82102846.1

(22) Date of filing: 02.04.82

(51) Int. Cl.³: A 01 N 25/02
A 01 N 37/22

(30) Priority: 06.04.81 IT 2095681

(43) Date of publication of application:
20.10.82 Bulletin 82/42

(84) Designated Contracting States:
BE CH DE FR GB LI LU NL

(71) Applicant: Montedison S.p.A.
31, Foro Buonaparte
I-20121 Milan(IT)

(72) Inventor: Dal Moro, Anacleto
22, viale Ungheria
Milan(IT)

(72) Inventor: Maccone, Sergio
6, Via Sebenico
Milan(IT)

(72) Inventor: Preziuso, Ciro
29, Via Bessarione
Milan(IT)

(74) Representative: Schmied-Kowarzik, Volker, Dr. et al,
Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8
D-8000 München 40(DE)

(54) **Isophorone-free formulations of herbicide propanyl.**

(57) Emulsifiable concentrates of herbicide Propanyl composed as follows:

A - Propanyl ........................................ 10-45% by weight

B - Cyclohexanone (or 4-methyl-cyclohexanone) .................................... 10-45% by weight

C - Triethanolamine dodecylbenzene sulphonate ........................................ 3-15% by weight

D - Non-ionic surfactants .................. 7-20% by weight

E - Aromatic solvents ........................ 0-5% by weight

EP 0 062 861 A1

Croydon Printing Company Ltd

BEZEICHNUNG
siehe Titelseite



This invention relates to formulations of herbicide N-(3,4-dichlorophenyl)-propionamide (common name: Propanyl); more particularly it relates to emulsifiable concentrates of Propanyl free from isophorone and having cyclohexanone or 4-methyl-cyclohexanone as a solvent.

Propanyl of formula:

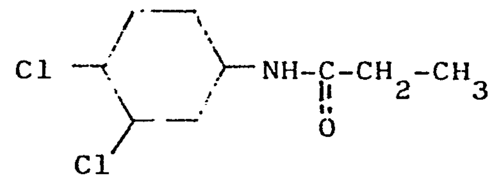

is a herbicide compound active in post-emergence and endowed with a low toxicity towards mammalians ($LD_{50}$= 1384 mg/kg).

Propanyl has been widely employed since many years in agriculture, mainly for the selective weed-killing in rice cultivations.

Its solubility in water is very low (225 ppm at room temperature), furthermore it is little soluble in the organic solvents most widely utilized in the usual formulative practice, such as for example the aromatic solvents.

For the weed-killing in rice cultivations Propanyl is generally commercialized as an emulsifiable concentrate having isophorone (3,5,5-trimethyl-2-cyclohexen-1-one) as solvent.

The use of isophorone is mainly due to the fact that Propanyl exhibits a good solubility in said solvent (60% by weght at 25°C), and the aqueous emulsions obtained by dilution of the concentrate are physically stable and do not form precipitates in relevant amounts.

It happens, on the contrary, that the emulsions in water of Propanyl solubilized in other organic solvents prove to be often physically little stable, with separation of oily or cream-like precipatetes in a shor time.

Isophorone, although not particularly toxic in itself towards mammalias, possesses irritating properties and is suspected to be cancerogenic.

These negative characteristics result in the fact that isophorone has been classified as a solvent belonging to the 1st toxicological class, subgroup b, according to E.E.C. Direction No. 80/781 of July 22, 1980.

By consequence, the formulations for agricultural use containing isophorone are classified,according to the new directions at least in the 2nd toxicological class and require particular precautions and a certain experience on the part of the users.

That occurs also for the formulations of Propanyl in isophorone, in spite of the low dangerousness of the active product which could be employed with greater safety if it were properly formulated so as to avoid the utilization of isophorone or of other solvents of similar dangerousness.

In the course of our research work aiming at finding alternative Propanyl formulations not containing isophorone and, consequently, not exhibiting the drawbacks connected thereto, we have tested several combinations of organic solvents and surfactants.

The results were, altogether, very discouraging because the aqueous emulsions prepared by dilution of the various concentrates caused in a short time, a phase separation with formation of oily or cream-like precipitates.

Such drawback is not negligible in the agricultural applications, since during the treatment an insufficient amount of active products would be distributed at the begenning and a too high dose towards the end.

On the contrary we have surprisingly found that emulsifiable concentrates of Propanyl containing cyclohexanone or 4-methyl-cyclohexanone as a solvent and triethanolamine

dodecylbenzenesulphonate in certain percentages, besides other components, lead to the obtainment of stable aqueous emulsions.

Thus, object of the present invention are the emulsifiable concentrates of herbicide Propanyl composed as follows:

A - Propanyl .......................... 10-45% by weight
B - Cyclohexanone (or 4-methyl-cyclohexanone) .......................... 10-45% by weight
C - Triethanolamine dodecylbenzene sulphonate .......................... 3-15% by weight
D - Non-ionic surfactants .............. 7-20% by weight
E - Aromatic solvents .................. 0-50% by weight

Within the abovesaid ranges, the emulsifiable concentrates having the composition given hereinbelow are preferred for practical reasons :

A - Propanyl .......................... 25-35% by weight
B - Cyclohexanone (or 4-methyl-cyclohexanone) .......................... 25-40% by weight
C - Triethandamine dodecylbenzenesulphonate .......................... 4- 8% by weight
D - Non-ionic surfactants .............. 10-20% by weight
E - Aromatic solvents .................. 5-25% by weight.

Cyclohexanone and 4-methyl-cyclohexanone are solvents endowed with a low toxicity towards mammalians and do not exhibit the negative properties of isophorone; in fact they are included in the 2nd toxicological class, subgroup d, of the above-mentioned E.C.C. directions.

Consequently it is apparent to those skilled in the formulation technique that the emulsifiable concentrates forming the object of the present invention do not exhibit the toxicilogical drawbacks of the ones containing isophorone.

We have also found that, when Propanyl is employed as an aqueous emulsion obtained by diluting the emulsifiable concentrates object of this invention, it provides unexpectedly better results than the commercially available isophorone-containing formulations, i.e. Propanyl proves more active as herbicide towards barnyard-grass and less phytotoxic towards rice itself, when formulated according to the present invention.

In the emulsifiable concentrates object of this invention, the minimum amount of active product is suggested exclusively by practical considerations with a view to containing the formulate volume in relation to the required amount of active product.

The higher limit, of course, is limited by the content of the other ingredients. Also Propanyl technical grade is advantageously suited to the preparation of said formulations.

The triethanolamine dodecylbenzenesulphonate is an anionic surfactant prepared from dodecylbenzenesulphonic acid and triethanolamine, wherefore its correct chemical name is triethanolammonium dodecylbenzenesulphonate.

BAD ORIGINAL

The denomination used herein, however, is the one commonly used.

The use of triethanolamine dodecylbenzene sulphonate has proved to be a particularly critical factor in stabilizing the aqueous emulsions of Propanyl solubilized in cyclohexanone.

In fact the non-ionic surfactants are completely inadequate to the purpose when employed without triethanolamine dodecylbenzene sulphonate ; on the other hand it does not seem possible to replace the abovesaid surfactant with other anionic surfactants, since some tests carried out by using calcium dodecylbenzene sulphonate or sodium dodecylbenzene sulphonate in the concentrates (the other components being equal) have evidenced that oily precipitates promptly separate from the aqueous emulsions (example 2), and in the storage tests of the concentrate even the forming of deposits (pitches) was observed.

The non-ionic surfactants (component D) employable in the formulations according to the present invention are the various polyoxyethylated surfactants, such as for example polyoxyethylated alkylphenols, polyoxyethylated glycerides and polyoxyethylated fatty acids.

To complete the formulations it is possible to employ aromatic solvents such as for example alkyl-benzene hydrocarbons and in particular the commercial mixtures of xylenes.

The formulations according to the invention are prepared by simple mixing of the components without any part-

BAD ORIGINAL

icular order of preference. To speed up the dissolution of the active product it may be advisable to slightly heat the mixture (40-50°C).

As mentioned hereinbefore, the biological properties of Propanyl as formulated according to the present invention are somewhat improved in respect of the isophorone-containing formulations.

Such differences which concern an increase in the herbicide activity towards barnyard-grass (Echinochloa crusgalli), the main infesting weed of rice coltures and a reduction in the phytotoxicity towards rice itself (example 3) are particularly unexpected when considering that in the compared formulations the active product is the same.

If desirable, it is possible to add to the formulations of this invention other active substances with the scope of widening the activity range, or if so required by particular conditions of use.

Among the active substances capable of being co-formulated we may cite Carbaryl [common name of compound N-methyl-O-(1-naphthyl)-carbamate], a well-known synergizing agent of Propanyl, and the phenoxy-acetic herbicides.

For the practical applications in agriculture, the formulations ---------- object of the present invention are diluted in water, and the resulting emulsions are used in the treatments usually recommended for Propanyl.

The amount of emulsifiable concentrate to be employed is directly proportional to the active product amount that

BAD ORIGINAL

has to be employed in the defence of a certain cultivation from the infesting weeds.

The following examples are given to better illustrate the present invention.

EXAMPLE 1

Preparation of emulsifiable concentrates according to the present invention.

General procedure :

A prefixed amount of Propanyl was mixed without any preferential order with prefixed amounts of cyclohexanone (or of 4-methyl-cyclohexanone), of aromatic solvent and of a previously prepared mixture of the surfactants.
The resulting mixture was heated to 40-50°C till obtaining a clear solution.
For preparing the emulsifiable concentrates the following surfactants were utilized :
"Emulson 255" registered trademark of ROL Company for triethanolamine dodecylbenzenesulphonate;
"Emulson 81C" registered trademark of ROL Company for polyoxyethylated castor-oil with a high content of ethylene oxide;
"Emulson 20B" registered trademark of ROL Company for polyoxyethylated nonyl-phenol;
"Emulson CO/25" registered trademark of ROL Company for polyoxyethylated castor-oil with a medium content of ethylene oxide.

Examples of emulsifiable concentrates according to the present invention are recorded on following Table 1.

BAD ORIGINAL

Table 1

| Components \ Composition (1) No. | | 1.1 | 1.2 | 1.3 | 1.4 | 1.5 |
|---|---|---|---|---|---|---|
| A | Propanyl | 35 | 35 | 35 | 35 | 10 |
| B | Cyclohexanone | 40 | 37 | 30 | | 20 |
| | 4-methyl-cyclohexanone | | | | 37 | |
| C | "Emulson 225" | 8 | 8 | 11.2 | 8 | 8 |
| D | "Emulson 810" | 1.2 | 1.2 | | 1.2 | 1.2 |
| | "Emulson 20B" | 10.8 | 10.8 | | 10.8 | 10.8 |
| | "Emulson CO/25" | | | 16.8 | | |
| E | Xylene (2) | 5 | 8 | 7 | 8 | 50 |

Notes to Table 1 :

(1) The amount of each component is expressed as percentage by weight.

(2) Xylene may be indifferently substituted by commercial mixtures of alkyl-benzenes such as for example "Shellsol AB" (registered trademark of Shell Company) and "Solvesso 150" (registered trademark of Esso Company).

EXAMPLE 2

Stability tests of the aqueous emulsions obtained from emulsifiable concentrates of the invention.

The tests were carried out according to the method and modalities described in "Specifications for Pesticides"

WHO, method 2, page 499, English edition 1961, by preparing emulsion at 5% in standard hard water and by observing the formations of cream and the separation of the emulsion after 1 hour at 29-31 °C.

By way of comparison there were prepared some emulsifiable concentrates analogous with those of example 1, but having anionic surfactants (Component C) different from triethanolamine dodecylbenzene sulphonate.

The comparison formulations are recorded on following Table 2.

Table 2

Comparative emulsifiable concentrates.

| Components | Composition (1) No. | 2.1 | 2.2 | 2.3 | 2.4 |
|---|---|---|---|---|---|
| A | Propanyl | 35 | 35 | 35 | 35 |
| B | Cyclohexanone | 37 | 37 | | |
| | 4-methyl-cyclohexanone | | | 37 | 37 |
| C' | "Agrol Ca/L" (2) | 8 | | 8 | |
| | "Geropon DDS" (3) | | 8 | | 8 |
| D | "Emulson 81C" | 1.2 | 1.2 | 1.2 | 1.2 |
| | "Emulson 20B" | 10.8 | 10.8 | 10.8 | 10.8 |
| E | Xylene | 8 | 8 | 8 | 8 |

Notes to Table 2 :

(1) The amount of each component is expressed as percentage by weight.

(2) "Agron Ca/L" registered trademark of RCL Company for calcium dodecylbenzenesulphonate.

(3) "Geropon DDS" registered trademark of Geronazzo Company for sodium dodecylbenzenesulphonate.

The results of the emulsion stability tests are recorded on following Table 3. The emulsifiable concentrates 1.1 to 1.4 according to the present invention (see Example 1) exhibit a higher initial capability of being emulsified and a separation of the emulsion definitely lower than that of the comparative concentrates 2.1 to 2.4 (see Table 2). These results point out how, the other components being equal, the anionic surfactant (component C) employed in the emulsifiable concentrates of the invention cannot be substituted by other anionic surfactants of similar structure (component C' in Table 2).

BAD ORIGINAL

Table 3

Stability of the aqueous emulsion of emulsifiable concentrates of the invention (1.1 to 1.4) and of comparative emulsifiable concentrates (2.1 to 2.4).

| Composition No. | Separation after 1 hour (emulsion volume = 100 ml) |
|---|---|
| 1.1 | 0.3 ml of cream at the bottom |
| 1.2 | 0.3 ml of cream at the bottom |
| 1.3 | no deposit |
| 1.4 | 0.5 ml of cream at the bottom |
| 2.1 | 10 ml of cream at the bottom |
| 2.2 | 4 ml of cream and 2 ml of oil at the bottom |
| 2.3 | 5 ml of oily cream at the bottom |
| 2.4 | 5 ml of oil at the bottom |

EXAMPLE 3

Determination of the herbicide activity on barnyard-grass and of the phototoxicity on rice of Propanyl; comparison between formulations according to the invention and formulations containing isophorone.

General procedure :

Barnyard-grass plants (Echinochloa crusgalli) about 10 cm high with 3 leaves and rice plants(cultivar RIBE type) of 15 cm height and with 3-4 leaves, cultivated in a flooded culture, were sprayed, after removal of the water, with

aqueous emulsions of the emulsifiable concentrates being tested, at different doses, with amounts of water corresponding to a practical application of 1,000 l/ha.

The small plants were then transferred to a glasshouse and, after three days, flooded again with a water layer of about 8 cm height. The plants were kept in the glasshouse during a 28-day period under the following conditions: temperature = 11-25°C, photoperiod = 12 hours, light intensity = 1,500 lux.

At the conclusion of such period, the vegetative state of the plants in comparison with untreated plants kept under the same conditions was observed. Both the herbicide activity on barnyard-grass and the phytotoxicity towards rice were evaluated according to a scale of values ranging from 0 (sound plant, growth like that of the check) to 9 (full stopping of the growth or death of the plant), the intermediate values representing intermediate situations of growth or of damages to the plants.

In the test there were utilized aqueous emulsions prepared by diluting emulsifiable concentrate 1.2 (see Table 1) according to the present invention and an emulsifiable concentrate (referred to as 3.1) similar to the commercial formulations of Propanyl containing isophorone.

Comparative emulsifiable concentrate 3.1

| | |
|---|---|
| Propanyl .............................. | 35% by weight |
| Isophorone ............................ | 30% by weight |
| Xylene ................................ | 15% by weight |

BAD ORIGINAL

"Agrol Ca/L" ...................... 8 % by weight
"Emulson 81C" ...................... 1.2% by weight
"Emulson 20B" ...................... 10.8% by weight

The results of the test, recorded on following Table 4, show how Propanyl when formulated according to the present invention exerts a higher herbicide activity on barnyard-grass and a lower phytotoxicity towards rice-plants as compared with isophorone-containing formulations.

Table 4

Herbicide activity on barnyard-grass and phytotoxicity towards rice-plants exerted by Propanyl in different formulations at the specified doses, expressed by a scale of values from 0 (no damage to the plant) to 9 (full stopping of the growth or death of the plant).

| Composition No. | Dose (kg/ha of active product) | Herbicide activity on barnyard-grass | Phytotoxicity towards rice-plants |
|---|---|---|---|
| 1.2 (1) | 1.5 | 5 | 0 |
| | 2 | 8 | 0 |
| | 3 | 9 | 0 |
| | 4 | 9 | 0 |
| | 6 | 9 | 0 |
| 3.1 (2) | 1.5 | 5 | 0 |
| | 2 | 7 | 0 |
| | 3 | 8 | 0 |
| | 4 | 9 | 0 |
| | 6 | 9 | 5 |

(1) Emulsifiable concentrate according to the invention (see Table 1)

(2) Commercial typed emulsifiable concentrate containing isophorone.

WHAT WE CLAIM IS :

1) Formulations in emulsifiable concentrate of herbicide Propanyl /N-(3,4-dichlorophenyl)-propionamide/ consisting of :

| | |
|---|---|
| A - Propanyl | 10-45% by weight |
| B - Cyclohexanone or 4-methyl-cyclohexanone | 10-45% by weight |
| C - Triethanolamine dodecylbenzenesulphonate | 3-15% by weight |
| D - Non-ionic surfactants | 7-20% by weight |
| E - Aromatic solvents | 0-50% by weight |

2) Formulations according to claim 1 consisting of :

| | |
|---|---|
| A - Propanyl | 25-35% by weight |
| B - Cyclohexanone or 4-methyl-cyclohexanone | 25-40% by weight |
| C - Triethanolamine dodecylbenzenesulphonate | 4-8 % by weight |
| D - Non-ionic surfactants | 10-20% by weight |
| E - Aromatic solvents | 5-25% by weight |

3) Formulations according to claim 2 consisting of :

| | |
|---|---|
| A - Propanyl | 35% by weight |
| B - Cyclohexanone | 37-40% by weight |
| C - Triethandamine dodecylbenzene sulphonate | 8% by weight |
| D - Non-ionic surfactants | 12% by weight |
| E - Xylene | 8-5 % by weight |

4) A method for fighting infesting weeds in useful cultivations by using the herbicide Propanyl, characterized in that Propanyl is employed in an aqueous emulsion prepared by diluting the emulsifiable concentrates of claims 1 to 3.

5) A method for fighting infesting weeds in useful cultivations, consisting in distributing in the cultivated area an effective amount of a aqueous emulsion obtained by diluting the emulsifiable concentrates of claims 1 to 3.

6) The method according to claim 4 or 5 applied to the weed-killing in rice cultivations.

7) Aqueous emulsions of herbicide Propanyl when obtained by diluting the emulsifiable concentrates of claims 1 to 3.

Milan,
PS/

European Patent Office

# EUROPEAN SEARCH REPORT

0062861

Application number

EP 82 10 2846

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A- 903 766 (ROHM AND HAAS) *Page 2, lines 57-116; claim 7* --- | 1-7 | A 01 N 25/02<br>A 01 N 37/22 |
| A | US-A-2 862 848 (V.J.KEENAN) *Column 2; tables 1 and 2* --- | 1-3 | |
| A | GB-A- 944 294 (SCHERING) *Example 1* ----- | 1-3 | |
| | | | TECHNICAL FIELDS SEARCHED (Int. Cl. 3) |
| | | | A 01 N |

The present search report has been drawn up for all claims

| Place of search | Date of completion of the search | Examiner |
|---|---|---|
| THE HAGUE | 23-07-1982 | DECORTE D. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document